# EUROPEAN PATENT SPECIFICATION

(11) **EP 1 207 404 B1**
(45) Date of publication and mention of the grant of the patent: **05.05.2010**
(21) Application number: 00125016.6
(22) Date of filing: 16.11.2000
(51) Int. Cl.: G01S 5/14

(54) **Cooperative positioning**
Kooperative Positionsbestimmung
Positionnement coopératif

(43) Date of publication of application: 22.05.2002
(73) Proprietor: Sony Deutschland GmbH, 10785 Berlin (DE)
(72) Inventor: Müller, Gil, Advanced Technology Center Stuttgart, 70327 Stuttgart (DE); Schill, Dietmar, Advanced Technology Center Stuttgart, 70327 Stuttgart (DE); Hagg, Wilhelm, Advanced Technology Center Stuttgart, 70327 Stuttgart (DE)
(74) Representative: Müller - Hoffmann & Partner

(56) References cited:
- WO-A-99/48233
- US-A- 5 526 357
- US-A- 5 774 876
- US-A- 6 130 642
- JAMI I ET AL: "Comparison of methods of locating and tracking cellular mobiles" IEE COLLOQUIUM NOVEL METHODS OF LOCATION AND TRACKING OF CELLULAR MOBILES AND THEIR SYSTEM APPLICATION,IEE, LONDON,BG, 1999, pages 1-1-1-6, XP002125128

## Description

The present invention concerns a method to determine an own position and a system to enable the determination of an own position working according to said method.

Currently the global positioning system (GPS) is the best method for positioning mobile subjects. However, this technology inherits the following drawbacks: With GPS reception problems occur particularly in urban areas, which means a reduced reliability for positioning information. Further, only a limited accuracy can be achieved, i. e. 20 meters or less. The accuracy could be improved using other technologies, like differential GPS, but poses additional overhead. This restricted accuracy is especially a problem for new mobile applications which demand an accuracy in the meter range, e. g. to locate vehicles up to the track or logistical applications. Finally, the power consumption of GPS is rather high, so it is not well-suited for continuous use. Alternatively to GPS are the Russian GLONASS (Global Navigation Satellite System) which provides less accuracy and the future European Galileo System.

US 5.774.876 describes a system of tags attached to objects. The tags are capable to determine and communicate position information based upon locally gathered information and based upon relative position information of other tags. The system of tags are organized in a way to allow for monitoring the objects to which the tags are attached for example in a storage area or in moving vehicles.

Jami et al. "Comparison of methods of locating and tracking cellular mobiles" IEEE Colloquium novel methods of location and tracking of cellular mobiles and their system applications, IEE, London, BG, 1999, pages 1/1 to 1/6, XP002125128 described the location estimation methods especially the signal attenuation method, the time of arrival method and the angle of arrival method. As well hybrid techniques are mentioned. Specifically some measurement errors are discussed to assess the different methods.

Further US 5.526.357 describes a multilateral two-way message system for mobile resource management, which transfers messages and determines the location of transponder devices. The locating process is achieved by at least three base stations and the transponder device, which is mainly but not restricted to a cellular phone. Time of arrival methods and round-trip techniques are described to determine the location.

Therefore, it is the object to provide a reliable method to determine an own position as well as a system enabling the determination of a position of an object according to the method of claim 1.

The system to determine an own position according to the present invention comprises different parts.
- First, a reference position source is provided which is characterized by a storage means to store position information of said reference position source and/or a position generation means, and a transmission means to transmit the stored position information as reference position information upon request and/or within given time intervals.
- Second, a reference position sink which can determine its own position according to the present invention comprises a reception means to receive position information, and a position calculation means to derive an own position on basis of a relative positioning calculation with the at least one received position information as reference position information.
- Third, a reference position refiner according to the present invention is characterized by a reception means to receive position information, a position calculation means to derive an own position on basis of a relative positioning calculation with the at least one received position information as reference position information, and a transmission means to transmit the received and/or calculated position information as reference position information upon request and/or within given time intervals.
- Fourth, a reference position repeater is provided according to the present invention, which comprises a reception means to receive position information, and a transmission means to transmit the received position information as reference position information upon request and/or within given time intervals.

Further, a method to exchange reference position information is proposed which comprises a push mode in which a participant sends out reference position information proactively, and a pull mode in which a participant requests reference position information that is delivered by one or more other participants.

Therewith, the present invention provides a method to determine an own position based on networking capabilities which many of today's devices already have or many devices will have in the future. This includes persons and vehicles, e. g. via mobile phones or other wireless technologies, but also the environment such as buildings or areas which will have this facility. Some of these entities will have position capabilities, maybe just because they do not move, and can therewith serve as a reference position source or a reference position refiner, and others will not have them or only to a very limited degree, but can evaluate transmitted reference position information and serve as a reference position sink to calculate their own position or as a reference position repeater for relaying position information.

Therewith, the present invention enables to share position information by the means of network technology in that a protocol is provided which enables entities to determine its own position using the information of other entities.

Preferred embodiments of the method to determine an own position according to the present invention which is defined in independent claim 1 are defined in dependent claims 2 to 16. These preferred embodiments also serve to elucidate the different parts of the system to determine an own position according to the present invention as defined in claims 19 to 25. The method to exchange reference position information according to the present invention is defined in claims 17 and 18.

The method to determine an own position according to the present invention is preferably further characterized by requesting a reference position information of at least one object which transmits its own position information before receiving said position information. Therewith, the own position cannot only be determined in a push mode in which a participant waits for at least one other participant to send out reference position information proactively, e.g. within given time intervals and/or when position changes occur, but also in a pull mode in which a participant requests reference position information that is delivered by one or more other participants.

According to the present invention said reference position information might include a signal strength of the transmission of said reference position information. In this case the transmitted signal strength could be an indicator for the relevance of the transmitted information e.g. in connection with the signal strength of the received signal and/or a known highest possible transmission signal strength. The latter possibility is of particular interest when the transmission signal strength is variable.

The reference position information preferably includes absolute position information and/or relative position information. An absolute position information includes e. g. absolute coordinates of the object transmitting the absolute position information, and a relative position information might include e. g. a direction into which said object transmits its own position information as reference position information.

Said reference position information might include an expiry time indicating the validity of the position information. Further, an indicator of the accuracy of the reference position information might also be included.

The reference position information is preferably transferred in a compressed format to reduce the amount of data which has to be communicated.

The relative positioning calculation according to the present invention might determine the distance and the direction of an object of which an own position information was received. The distance and the direction of an object might be determined on a field strength, an angle of arrival, and/or a propagation delay of a received position information.

According to the present invention all communications are preferably carried out via an air interface with a predetermined protocol which does not require a synchronization.

In case collision with another communication is detected indicating that the communication was not successful, it is preferably repeated at a randomly chosen time. In this case an average delay of said randomly chosen time is set to increase with the number of collisions detected, e.g. an exponential increase might be set. Further, it might be reduced in case a predetermined number of transmissions were successful and a transmission channel shows free capacities. Also, an increase and decrease of the average delay of said randomly chosen time might be determined in accordance with an accuracy of a transmitted position information.

Further features and advantages of the method and system according to the present invention will become apparent from the following detailed description of exemplary embodiments thereof taken in conjunction with the accompanying drawings, wherein
- **Fig. 1**: shows the scenario for cooperative positioning according to the present invention;
- **Fig. 2**: shows the architecture for cooperative positioning according to a preferred arrangement of the present invention;
- **Fig. 3**: shows a first preferred method according to the present invention to determine an own position according to a relative positioning calculation; and
- **Fig. 4**: shows a second preferred method to determine an own position according to a relative positioning calculation.

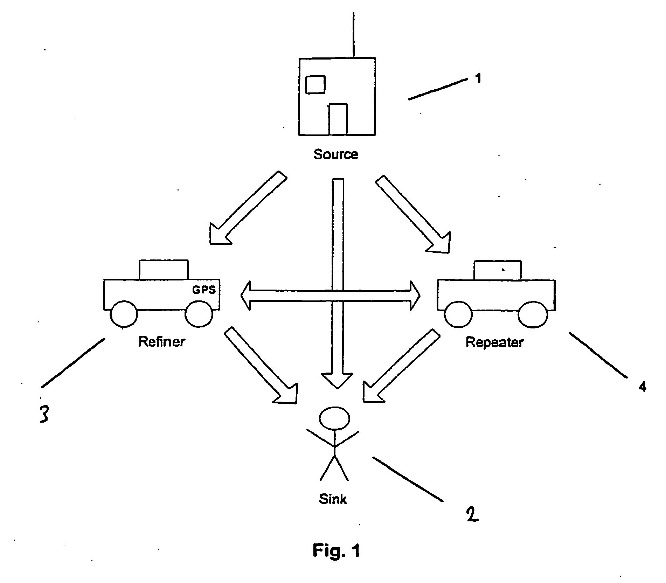

Fig. 1 shows the scenario for cooperative positioning according to a preferred arrangement of the present invention. Basically, four different types of participants are available. A reference station 1 knows its exact position and therefore just provides positioning information, i. e. it serves as a source. Generally, a source is an object with highly accurate reference position information coming from outside the system (e.g. a fix object) and therefore no means to derive its own position are needed. In Fig. 1 the reference station 1 is therefore schematically depicted as a house. Further, a consumer 2, i. e. a participant which only consumes the information, in other words, a sink, is schematically depicted as a human being in Fig. 1. The remaining two types of participants are arranged in between the extremes of source 1 and sink 2, wherein a refiner 3 has some positioning abilities and is able to receive and send this kind of information and a repeater 4 has no positioning capabilities, but is able to receive and send positioning information. The refiner 3 and the repeater 4 are respectively schematically depicted as a car in Fig. 1, wherein the refiner 3 may comprise a GPS system and the repeater 4 may comprise a GPS system or not. Arrows indicated in Fig. 1 show the flow of position information as described above. Therefore, three arrows originate from the source 1, a respective one of which is directed to the refiner 3, the sink 2, and the repeater 4. Further, a respective arrow originating from the refiner 3 and the repeater 4 is directed towards the sink 2. In-between the refiner 3 and the repeater 4 a double arrow is shown to indicate that the refiner 3 might send its own position information to the repeater or might receive position information received and transmitted by the repeater 4.

Such a cooperative positioning service has the advantage that the reliability of the positioning information is increased, as particularly in urban areas many participants for this service are expected. Further, the accuracy could be increased, as participants with low quality positioning devices could improve their position estimation. Finally, the effort for the position calculation is lower than a GPS solution if only one receiver is used, so that the power consumption is reduced.

Therewith, a continuous position information is enabled even in urban areas and other difficult environments and therewith a mechanism to enable navigation applications on simple, cheap devices with lack of an expensive GPS hardware with high power consumption is provided, i. e. the present invention enables navigation applications on a wide range of mobile devices.

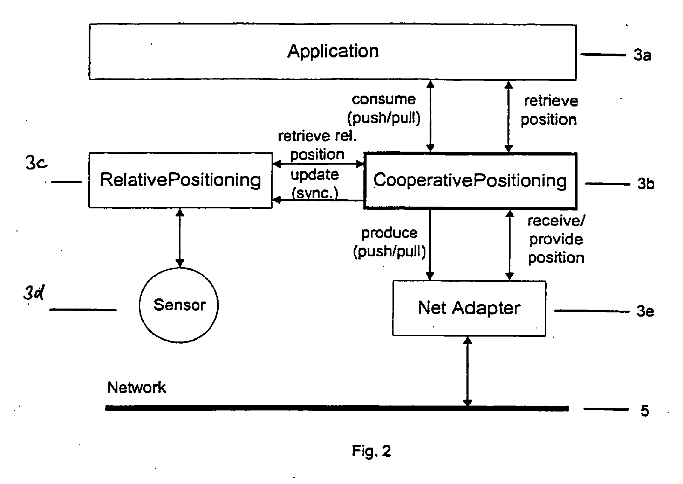

Fig. 2 elucidates the cooperative positioning service according to the present invention in more detail, i. e. shows the necessary architecture. Since the source 1, the sink 2 and the repeater 4 have just fewer functionality in comparison to the refiner 3, only the structure for a refiner 3 is shown in Fig. 2.

Within the refiner 3, on top an application 3a is arranged, which consumes positioning information, but is also able to provide it. Beneath the application 3a a cooperative positioning component 3b is installed that coordinates the consumption and production of the positioning information. A relative positioning component arranged in the same layer as the cooperative positioning component 3b is able to determine the relative position with respect to other participants using the incoming position information and possibly one or more sensors 3d arranged in a layer beneath the relative positioning component 3c. A network adapter component 3e which is arranged in the same layer as the one or more sensors 3d is responsible for sending and receiving blocks of data via a network 5 which is used to communicate between all participants of the cooperative positioning scenario as shown in Fig. 1, i. e. is preferably build as a wireless network.

Between network 5 and the net adapter component 3e a bi-directional connection is provided for the sending and receiving of the data blocks. In-between the relative positioning component 3c and the one or more sensors 3d also a bi-directional connection is provided to control the one or more sensors 3d and to receive information therefrom. The cooperative positioning component 3b provides update information, i. e. synchronization information, to the relative positioning component 3c via a unidirectional connection and is further bi-directionally connected to the relative positioning component 3c to retrieve the relative position. Further, as mentioned above, the cooperative positioning component 3b also controls the flow of position information of the refiner 3. Therefore, since the application 3a can consume and provide position information, a bi-directional control connection in-between the cooperative positioning component 3b and the application 3a is provided to determine the consumption of position information, i. e. a push/pull operation in-between the application and the cooperative positioning. The position information itself is exchanged via a further bi-directional connection in-between the application 3a and the cooperative positioning component 3b. To receive/provide position information to the network 5 the net adapter 3e is bi-directionally connected to the cooperative positioning component 3b. Further, a bidirectional control connection indicating the mode of producing of position information to the network and/or handling requests of position information issued from the network is provided in-between the cooperative positioning component 3b and the net adapter 3e.

As mentioned above, the position information can be pushed and pulled. When the information is consumed, e. g. by the application 3a, pushing means that the cooperative positioning component 3b will just wait for the incoming data, while in the pull mode a request for position information from the network 5 is sent via the net adapter 3e in advance. Pushing in production of position information means to send out the information to the network 5 at regular intervals or when changes occur. This contrasts with the pull mode for production, in which the information is transmitted to the network 5 only when requested by another repeater 4, refiner 3 or sink 2.

The cooperative positioning component 3b will send update messages to the relative cooperative positioning component 3c whenever it receives some messages from another participant and the relative positioning component 3c will then update its relative position data with regards to the involved participant. If the position information was pulled, then also the relative position information of the other participants is included.

As mentioned above, each source 1 or refiner 3 preferably provides at least information on its own, absolute position. At least in case of a refiner 3 this information should be accompanied by an expiry time in order to avoid confusion by moving participants. Besides this basic information other parameters which identify the information transmitting participant and/or a classification thereof and therewith are useful to describe the quality of the position information might additionally be transmitted to enable the application of fusion algorithms for position estimating and therefore an increased position accuracy. Alternatively or additionally to the own, absolute position, all relative position information may be provided by each participant. The relative position information from different sources may be used to achieve a higher positioning accuracy by averaging effects. The relative position calculation according to the present invention is preferably a mesh generation algorithm such as the Delauney Triangulation.

The total amount of data transmitted starts at approximately 8 bytes for the basic position information. Depending on the number of relative positions to transmit, it may surpass a value of 100 bytes. This information has to be transmitted frequently in order to get a continuous positioning service with immediate response. Compression methods may be applied in order to reduce the amount of data.

In a cooperative positioning environment according to the present invention each refiner 3 or sink 2 might have redundant position information from different sources available. Several independent estimates of the own position can be done based on different adjacent sources 1, refiners 3, and/or repeaters 4. In addition, as mentioned above, refiners 3 may provide an own position estimate, based on a GPS or a differential GPS-receiver or another position determination means. In order to achieve a higher position accuracy, redundant position information may be combined using appropriate data fusion methods.

Stationary participants, such as sources 1, and mobile differential GPS units provide a very accurate position information and will be widely available in the future. The primary source of position errors in a cooperative positioning environment is therefore given by the relative positioning procedure. The relative positioning error is regarded as significant, since the equipment used for that purpose has to be as cheap as possible. A data fusion procedure for the position estimate is therefore advantageous.

The most simple method for optimizing the position estimate is to select the best position available. Better results are expected from a true fusion, where the estimated parameters are weighted according to their initial accuracy. The fusion enables an increase in position accuracy by the statistical averaging effect. In addition to the own relative position estimates, the estimate of each adjacent refiner 3 may be used in the fusion process.

A more sophisticated procedure incorporating a network of participants as shown in Fig. 1 may increase the accuracy especially in those areas where no high accurate participant is found in the neighborhood. Since the position is then based on a sequence of estimates, the accuracy might be heavily degraded by error propagation. This problem is well-known from other areas as geodetic measurements for land surveying. Mesh generation algorithms as the well-known Delauney Triangulation may be used to solve this problem and to achieve a higher accuracy.

For the purpose of applying a mesh generation algorithm as many different position informations as possible within the considered network should be available in a participant. Therefore, each participant, i.e. refiner, should repeat some of the position estimates it receives. Participants which provide a highly accurate position will only repeat estimates from direct neighbours. When the position quality decreases, also estimates from more distant participants will be repeated in order to increase the final estimation quality.

The aim of relative positioning is to obtain an estimate for the recipients, i. e. the refiners 3 or sinks 2 positions, by processing position information transmitted from various locations. The goal is to obtain a possibly refined position as compared to the accuracy of the individual positions received. The prime target therefore is to estimate the distance and the direction of each transmitter, i. e. source 1, refiner 3, and/or repeater 4, of positioning information that can be received by a recipient, i. e. refiner 3 or sink 2 which wants to determine its own position. Basically, three physical effects could be exploited:
**1.** Field strength + position of transmitter
**2.** Angle of arrival + position of transmitter
**3.** Propagation delay + position of transmitter.

### Ad 1

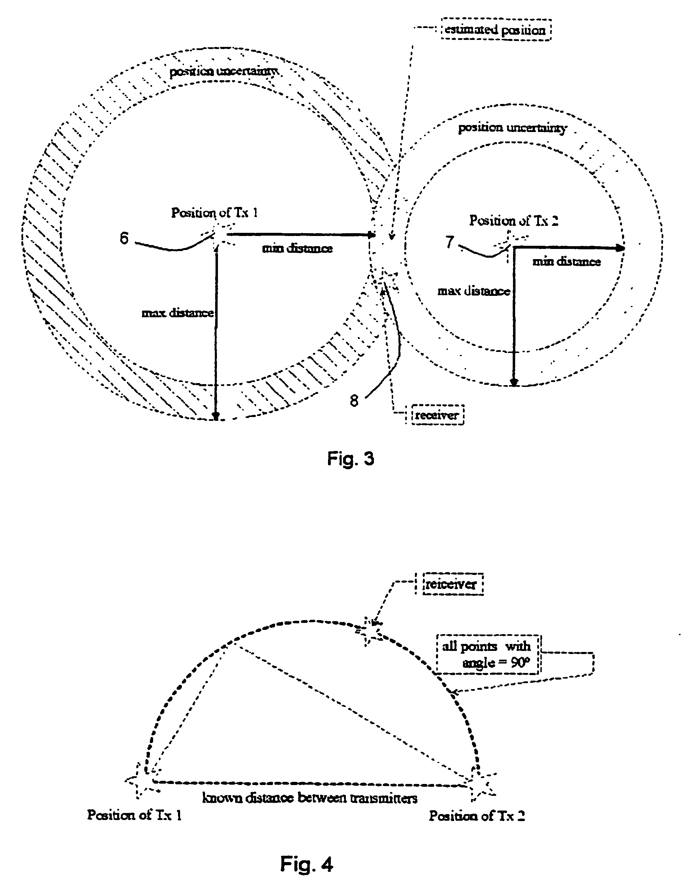

Under the assumptions that the field strength at a receiver can be accurately measured and the transmitted power is known, e.g. since it is transmitted with the reference position information, an estimate for the distance between transmitter and receiver can be calculated from the resulting path loss. Having access to only one estimate the position of the receiver can not be estimated accurately from the transmitted position. However, having access to two or more estimates, the position estimate gets considerably better, as shown in Fig. 3.

Fig. 3 shows a first transmitter 6 and a second transmitter 7 which concentrically send out their respective position information. On basis of the measured field strength at a receiver 8 the position of the receiver 8 can be estimated within the intersection of a position uncertainty of the first transmitter 6 and the position uncertainty of the second transmitter 7. A respective position uncertainty of the first transmitter 6 and the second transmitter 7 is given as difference of a respective maximum and minimum distance calculated from the receiver 8 to the respective transmitter 6, 7 on basis of the field strength.

However, problems might arise for high frequencies with this method due to fast changing field strength due to near field effects. Nevertheless, integration over a time for a whole burst of received information could relax this problem for moving receivers.

### Ad 2

A second possibility of refining the receiver's position is to estimate the angle of arrival of as many received transmissions as possible. This enables the receiver to simply calculate the difference in angle of arrival between pairs of received transmissions. Together with the known position of two transmitters a trajectory can be calculated that holds all possible positions of the receiver. Fig. 4 illustrates an example for a difference in the angle of arrival of 90 degrees that leads to the well-known cycle of Tales.

Other angles will produce slightly more difficult curves, but the method remains unchanged. A refinement of the position can be achieved by processing several pairs of transmissions and searching for the intersection of the trajectories. In order to obtain estimates of the angle of arrival, the receiver can make use of an antenna array.

### Ad 3

Estimating the delay of the transmission due to the propagation of the electromagnetic field from the transmitter to the receiver seems also to be a possible solution. However, the transmission delays have to be measured with a comparable high accuracy.

Of course, a combination of these methods, in particular of methods 1 and 2, could further improve accuracy and robustance of the position estimation.

The network does not have to be able to accommodate the communication among a large range of possible users effectively. According to the present invention the access to the network should preferrably not require any synchronization among the users of the network. Therefore, each user is allowed to transmit a burst of information at arbitrary time instances over the air interface.

If a collision with another user is detected both users responsible for such a collision will try again at randomly chosen time instance in the future. The average delay before the next transmission is transmitted with exponentially increase with the number of collisions detected. Inversely, the back-off time is reduced with several transmission were successful and the transmission channel is quiet. A distinction can be made in the increase and decrease of the back-off time depending on the accuracy the transmitter is capable of sharing with other users. With these two mechanisms, it can be assured that a large number as well as a very small number of users can effectively share the common air interface in a stable fashion in that precise positioning information is inherently transmitted with priority in the asynchronous transmission protocol.

The geographical extend of the network can be adapted through the transmitters signal power. Thereby, the number of users exchanging information can be adjusted to the geographical distribution of users. In particular by variations of the strength of the transmitters signal power.

## Claims

1. Method to determine a position (8) of an object (2) comprising,
transmitting, by at least one further object (1,3), the position information of the further object,
receiving, by the object (2), the position information of the further object as reference position (6.7) information, and
deriving, by the object (2), the position of the object (2) on basis of a relative positioning calculation by determining the distance and/or the direction of the further object of which the reference position (6,7) was received,
**characterized in that** the reference position information includes an expiry time indicating the validity of the position information.

2. Method according to claim 1, **characterized by**
sending a reference position information request to at least one object (1,3) which transmits the position information before receiving said position information.

3. Method according to claim 1 or 2, **characterized in that** said reference position information includes a signal strength of the transmission of said reference position information.

4. Method according to anyone of the preceding claims, **characterized in that** said reference position information includes absolute position information and/or relative position information.

5. Method according to anyone of the preceding claims, **characterized in that** said reference position information includes an indicator of its accuracy.

6. Method according to anyone of the preceding claims, **characterized in that** said reference position information is transferred in a compressed format.

7. Method according to anyone of the preceding claims, **characterized in that** a graph based algorithm such as the Delauney Triangulation is used as said relative positioning calculation.

8. Method according to claim 1, **characterized in that** the distance and the direction of the further object is determined based on field strength, and/or an angle of arrival, and/or a propagation delay of the received position information.

9. Method according to anyone of the preceding claims, **characterized by** communicating via an air interface with a predetermined protocol which does or does not require a synchronization.

10. Method according to anyone of the preceding claims, **characterized by** repeating a communication at a randomly chosen time in case a collision with another communication is detected.

11. Method according to claim 10, **characterized in that** a back off time of said randomly chosen time is set to increase with the number of collisions detected.

12. Method according to claim 10 or 11, **characterized in that** a back off time of said randomly chosen time is reduced in case a predetermined number of transmissions were successful and a transmission channel shows free capacities.

13. Method according to claim 11 or 12, **characterized in that** an increase and decrease of the back off time of said randomly chosen time is determined in accordance with an accuracy of a transmitted position information.

14. Method according to anyone of the preceding claims, **characterized by** identifying a participant (2) of which reference position information was received to classify , the corresponding received reference position information to be used as reference.

15. Method according to any of the preceding claims, further comprising
a push mode in which a participant (1.3) sends out reference position information proactively, and
a pull mode in which a participant (2) requests reference position information that is delivered by one or more other participants (1,3,4).

16. Reference position source (1) configured to be used in a system of devices to determine a position of one of the devices of the system according to the position determination method of claim 1, comprising
a storage means to store position information of said reference position source and/or a position generation means, and
a transmission means to transmit the stored position information as reference position information, **characterized in that**
the reference position source is configured to transmit the stored information including an expiry time indicating the validity of the position information.

17. Reference position source (1) according to claim 16, **characterized in that** said transmission means transmits the stored position information upon request and/or within given time intervals and/or when position changes occur.

18. Reference position sink (2), comprising
a reception means to receive position information, and
a position calculation means to derive a position of the reference position sink (2) on basis of a relative positioning calculation by determining the distance and/or the direction of at least one object (1.3) of which the position information was received, **characterized in that**
the position information includes an expiry time indicating the validity of the position information.

19. Reference position repeater (4) configured to be used in a system of devices to determine a position of one of the devices of the system according to the position determination method of claim 1, comprising
a reception means to receive position information, and
a transmission means to transmit the received position information as reference position information, **characterized in that**
the position information includes an expiry time indicating the validity of the position information.

20. Reference position repeater (4) according to claim 19, **characterized in that** said transmission means transmits the received position information upon request and/or within given time intervals and/or when position changes occur.

21. Reference position refiner (3) configured to be used in a system of devices to determine a position of one of the devices of the system according to the position determination method of claim 1, comprising
a reception means to receive position information,
a position calculation means to derive a position of the reference position refiner (3) on basis of a relative positioning calculation by determining the distance and/or the direction of at least one object (1.3) of which the position information was received and/or reference position information retrieved locally, and
a transmission means to transmit the received and/or calculated position information as reference position, **characterized in that**
the received and/or calculated position information includes an expiry time indicating the validity of the received and/or calculated position information.

22. Reference position refiner according to claim 21, **characterized in that** said transmission means transmits the received and/or calculated position information upon request and/or within given time intervals and/or when position changes occur.

## Patentansprüche

1. Verfahren zum Bestimmen einer Position (8) eines Objektes (2), das die Schritte aufweist
Übertragen, durch wenigstens ein weiteres Objekt (1, 3), einer Positionsinformation des weiteren Objektes,
Empfangen, durch das Objekt (2), der Positionsinformation des weiteren Objektes als Referenzpositionsinformation (6, 7), und
Ableiten, durch das Objekt (2), die Position des Objektes (2) auf der Grundlage einer relativen Positionsberechnung durch Bestimmen der Entfernung und/oder der Richtung des weiteren Objektes, von dem die Referenzposition (6, 7) empfangen wurde,
**dadurch gekennzeichnet, dass** die Referenzpositionsinformation eine Ablaufzeit aufweist, die die Gültigkeit der Positionsinformation anzeigt.

2. Verfahren nach Anspruch 1, **gekennzeichnet durch**
Senden einer Anforderung für eine Referenzpositionsinformation an wenigstens ein Objekt (1, 3), das die Positionsinformation überträgt, bevor die Positionsinformation empfangen wird.

3. Verfahren nach Anspruch 1 oder 2, **dadurch gekennzeichnet, dass** die Referenzpositionsinformation eine Übertragungssignalstärke der Referenzpositionsinformation aufweist.

4. Verfahren nach einem der vorangehenden Ansprüche, **dadurch gekennzeichnet, dass** die Referenzpositionsinformation eine absolute Positionsinformation und/oder eine relative Positionsinformation aufweist.

5. Verfahren nach einem der vorangehenden Ansprüche, **dadurch gekennzeichnet, dass** die Referenzpositionsinformation einen Indikator für ihre Genauigkeit aufweist.

6. Verfahren nach einem der vorangehenden Ansprüche, **dadurch gekennzeichnet, dass** die Referenzpositionsinformation in einem komprimierten Format übermittelt wird.

7. Verfahrenen nach einem der vorangehenden Ansprüche, **dadurch gekennzeichnet, dass** ein Graph-basierter Algorithmus wie die Delauney Triangulation für die relative Positionsberechnung verwendet wird.

8. Verfahren nach Anspruch 1, **dadurch gekennzeichnet, dass** die Entfernung und die Richtung des weiteren Objektes auf der Grundlage einer Feldstärke und/oder eines Einfallswinkels und/oder einer Laufzeitverzögerung der empfangenen Positionsinformation bestimmt werden.

9. Verfahren nach einem der vorangehenden Ansprüche, **gekennzeichnet durch** Kommunizieren über eine Luft-Schnittstelle mit einem vorbestimmten Protokoll, das eine Synchronisation erfordert oder nicht erfordert.

10. Verfahrenen nach einem der vorangehenden Ansprüche, **gekennzeichnet durch** Wiederholen einer Kommunikation zu einer zufällig gewählten Zeit in dem Fall, dass eine Kollision mit einer anderen Kommunikation festgestellt wird.

11. Verfahren nach Anspruch 10, **dadurch gekennzeichnet, dass** eine Wartezeit für die zufällig gewählte Zeit so gesetzt wird, dass die Wartezeit mit der Anzahl festgestellter Kollisionen steigt.

12. Verfahren nach Anspruch 10 oder 11, **dadurch gekennzeichnet, dass** eine Wartezeit für die zufällig gewählte Zeit verringert wird in dem Fall, dass eine vorbestimmte Anzahl an Übertragungen erfolgreich war und ein Übertragungskanal freie Kapazitäten aufweist.

13. Verfahren nach Anspruche 11 oder 12, **dadurch gekennzeichnet, dass** eine Erhöhung oder eine Verringerung der Wartezeit für die zufällig gewählte Zeit gemäß einer Genauigkeit einer übertragenen Positionsinformation bestimmt wird.

14. Verfahren nach einem der vorangehenden Ansprüche, **gekennzeichnet durch** Identifizieren eines Teilnehmers (2), von dem die Referenzpositionsinformation empfangen wurde, um die entsprechende, empfangene Referenzpositionsinformation, die als Referenz zu benutzen ist, zu klassifizieren.

15. Verfahren nach einem der vorangehenden Ansprüche, weiterhin mit
einem Push-Modus, bei dem ein Teilnehmer (1, 3) eine Referenzpositionsinformation pro-aktiv sendet, und
einem Pull-Modus, bei dem ein Teilnehmer (2) eine Referenzpositionsinformation anfordert, die von einem oder mehreren weiteren Teilnehmern (1, 3, 4) geliefert wird.

16. Referenzpositionsquelle (1), die für eine Benutzung in einem System aus Vorrichtungen zum Bestimmen einer Position einer der Vorrichtungen des Systems gemäß dem Positionsbestimmungsverfahren nach Anspruch 1 ausgestaltet ist, mit
einem Speichermittel zum Speichern einer Positionsinformation der Referenzpositionsquelle und/oder einem Mittel zur Bildung einer Position, und
einem Übertragungsmittel zum Übertragen der gespeicherten Positionsinformation als Referenzpositionsinformation, **dadurch gekennzeichnet, dass**
die Referenzpositionsquelle für ein Übertragen der gespeicherten Information, die eine Ablaufzeit aufweist, die die Gültigkeit der Positionsinformation anzeigt, ausgestaltet ist.

17. Referenzpositionsquelle (1) nach Anspruch 16, **dadurch gekennzeichnet, dass** das Übertragungsmittel die gespeicherte Positionsinformation auf Anfrage und/oder innerhalb vorgegebener Zeitintervalle und/oder bei Positionswechsel überträgt.

18. Referenzpositionssenke (2) mit
einem Empfänger zum Empfangen einer Positionsinformation, und
einem Positionsberechnungsmittel zum Ableiten einer Position der Referenzpositionssenke (2) auf der Grundlage einer relativen Positionsberechnung durch Bestimmen der Entfernung und/oder der Richtung wenigstens eines Objektes (1, 3), von dem die Positionsinformation empfangen wurde, **dadurch gekennzeichnet, dass**
die Referenzpositionsinformation eine Ablaufzeit aufweist, die die Gültigkeit der Positionsinformation anzeigt.

19. Referenzpositionswiederholer (4), der für eine Benutzung in einem System aus Vorrichtungen zum Bestimmen einer Positionen einer der Vorrichtungen des Systems gemäß dem Positionsbestimmungsverfahren nach Anspruch 1 ausgestaltet ist, mit
einem Empfänger zum Empfangen einer Positionsinformation, und
einem Übertragungsmittel zum Übertragen der empfangenen Positionsinformation als Referenzpositionsinformation, **dadurch gekennzeichnet, dass**
die Positionsinformation eine Ablaufzeit aufweist, die die Gültigkeit der Positionsinformation anzeigt.

20. Referenzpositionswiederholer (4) nach Anspruch 19, **dadurch gekennzeichnet, dass** das Übertragungsmittel die empfangene Positionsinformation auf Anfrage und/oder innerhalb vorgegebener Zeitintervalle und/oder bei Positionswechsel überträgt.

21. Referenzpositionsverfeinerer (3), der für eine Benutzung in einem System aus Vorrichtungen zum Bestimmen einer Positionen einer der Vorrichtungen des Systems gemäß dem Positionsbestimmungsverfahren nach Anspruch 1 ausgestaltet ist, mit
einem Empfänger zum Empfangen einer Positionsinformation,
einem Positionsberechnungsmittel zum Ableiten einer Position des Referenzpositionsverfeinerers (3) auf der Grundlage einer relativen Positionsberechnung durch Bestimmen der Entfernung und/oder der Richtung wenigstens eines Objektes (1, 3), von dem die Positionsinformation empfangen wurde, und/oder einer lokal abgerufenen Referenzpositionsinformation, und
einem Übertragungsmittel zum Übertragen der empfangenen und/oder berechneten Positionsinformation als Referenzposition, **dadurch gekennzeichnet, dass**
die empfangene und/oder berechnete Positionsinformation eine Ablaufzeit aufweist, die die Gültigkeit der empfangenen und/oder der berechneten Positionsinformation anzeigt.

22. Referenzpositionsverfeinerer nach Anspruch 21, **dadurch gekennzeichnet, dass** das Übertragungsmittel die empfangene und/oder berechnete Positionsinformation auf Anfrage und/oder innerhalb vorgegebener Zeitintervalle und/oder bei Positionswechsel überträgt.

## Revendications

1. Procédé pour déterminer la position (8) d'un objet (2) comprenant,
la transmission, par au moins un autre objet (1, 3), des informations de position de l'autre objet,
la réception, par l'objet (2), des informations de position de l'autre objet comme informations de position de référence (6, 7), et
la détermination, par l'objet (2) de la position de l'objet (2) en se basant sur un calcul de positionnement relatif par détermination de la distance et/ou de la direction de l'autre objet dont la position de référence (6, 7) a été reçue,
**caractérisé en ce que** les informations de position de référence comportent une heure d'expiration indiquant la validité des informations de position.

2. Procédé selon la revendication 1, **caractérisé par**
l'envoi d'une demande d'informations de position de référence à au moins un objet (1, 3) qui transmet les informations de position avant la réception desdites informations de position.

3. Procédé selon la revendication 1 ou 2, **caractérisé en ce que** lesdites informations de position de référence comportent la force de signal de la transmission desdites informations de position de référence.

4. Procédé selon l'une quelconque des revendications précédentes, **caractérisé en ce que** lesdites informations de position de référence comportent des informations de position absolue et/ou des informations de position relative.

5. Procédé selon l'une quelconque des revendications précédentes, **caractérisé en ce que** lesdites informations de position de référence comportent un indicateur de leur précision.

6. Procédé selon l'une quelconque des revendications précédentes, **caractérisé en ce que** lesdites informations de position de référence sont transférées dans un format compressé.

7. Procédé selon l'une quelconque des revendications précédentes, **caractérisé en ce qu'**un algorithme basé sur une courbe telle que la triangulation de Delauney est utilisé en tant que dit calcul de positionnement relatif.

8. Procédé selon la revendication 1, **caractérisé en ce que** la distance et la direction de l'autre objet sont déterminées en se basant sur la force de champ et/ou l'angle d'arrivée et/ou le retard de propagation des informations de position reçues.

9. Procédé selon l'une quelconque des revendications précédentes, **caractérisé par** la communication par l'intermédiaire d'une interface hertzienne avec un protocole prédéterminé qui nécessite ou non une synchronisation.

10. Procédé selon l'une quelconque des revendications précédentes, **caractérisé par** la répétition d'une communication à une heure choisie de manière aléatoire dans le cas où l'on détecte une collision avec une autre communication.

11. Procédé selon la revendication 10, **caractérisé en ce qu'**un temps de réduction de puissance de ladite heure choisie de manière aléatoire est fixé de manière à augmenter avec le nombre de collisions détectées.

12. Procédé selon la revendication 10 ou 11, **caractérisé en ce qu'**un temps de réduction de puissance de ladite heure choisie de manière aléatoire est réduit en cas de succès d'un nombre prédéterminé de transmissions et si un canal de transmission présente des capacités libres.

13. Procédé selon la revendication 11 ou 12, **caractérisé en ce qu'**une augmentation et une diminution du temps de réduction de puissance de ladite heure choisie de manière aléatoire sont déterminées en fonction de la précision des informations de position transmises.

14. Procédé selon l'une quelconque des revendications précédentes, **caractérisé par** l'identification d'un participant (2) dont les informations de position de référence ont été reçues pour classer les informations de position de référence reçues correspondantes pour être utilisées en tant que référence.

15. Procédé selon l'une quelconque des revendications précédentes, comprenant en outre
un mode pousser dans lequel un participant (1, 3) envoie en sortie des informations de position de référence de manière proactive, et
un mode tirer dans lequel un participant (2) demande des informations de position de référence qui sont délivrées par un ou plusieurs autres participants (1, 3, 4).

16. Source de position de référence (1) configurée pour être utilisée dans un système de dispositifs pour déterminer la position de l'un des dispositifs du système selon le procédé de détermination de position de la revendication 1, comprenant
un moyen de mémorisation pour mémoriser des informations de position de ladite source de position de référence et/ou un moyen de génération de position, et
un moyen de transmission pour transmettre les informations de position mémorisées comme informations de position de référence, **caractérisée en ce que**
la source de position de référence est configurée pour transmettre les informations mémorisées incluant une heure d'expiration indiquant la validité des informations de position.

17. Source de position de référence (1) selon la revendication 16, **caractérisée en ce que** ledit moyen de transmission transmet les informations de position mémorisées sur demande et/ou dans des intervalles de temps donnés et/ou lorsque se produisent des changements de position.

18. Collecteur de position de référence (2), comprenant
un moyen de réception pour recevoir des informations de position, et
un moyen de calcul de position pour déterminer la position du collecteur de position de référence (2) en se basant sur un calcul de positionnement relatif par détermination de la distance et/ou de la direction d'au moins un objet (1, 3) dont les informations de position ont été reçues, **caractérisé en ce que**
les informations de position comportent une heure d'expiration indiquant la validité des informations de position.

19. Répéteur de position de référence (4) configuré pour être utilisé dans un système de dispositifs pour déterminer la position de l'un des dispositifs du système selon le procédé de détermination de position de la revendication 1, comprenant
un moyen de réception pour recevoir des informations de position, et
un moyen de transmission pour transmettre les informations de position reçues comme informations de position de référence, **caractérisé en ce que**
les informations de position comportent une heure d'expiration indiquant la validité des informations de position.

20. Répéteur de position de référence (4) selon la revendication 19, **caractérisé en ce que** ledit moyen de transmission transmet les informations de position reçues sur demande et/ou dans des intervalles de temps donnés et/ou lorsque se produisent des changements de position.

21. Affineur de position de référence (3) configuré pour être utilisé dans un système de dispositifs pour déterminer la position de l'un des dispositifs du système selon le procédé de détermination de position de la revendication 1, comprenant
un moyen de réception pour recevoir des informations de position,
un moyen de calcul de position pour déterminer la position de l'affineur de position de référence (3) en se basant sur un calcul de positionnement relatif par détermination de la distance et/ou de la direction d'au moins un objet (1, 3) dont les informations de position ont été reçues et/ou les informations de position de référence récupérées localement, et
un moyen de transmission pour transmettre les informations de position reçues et/ou calculées en tant que position de référence, **caractérisé en ce que**
les informations de position reçues et/ou calculées comportent une heure d'expiration indiquant la validité des informations de position reçues et/ou calculées.

22. Affineur de position de référence selon la revendication 21, **caractérisé en ce que** ledit moyen de transmission transmet les informations de position reçues et/ou calculées sur demande et/ou dans des intervalles de temps donnés et/ou lorsque se produisent des changements de position.
